# EUROPEAN PATENT APPLICATION

(11) **EP 1 435 284 A2**
(43) Date of publication of application: **07.07.2004**
(21) Application number: 03079016.6
(22) Date of filing: 29.12.2003
(51) Int. Cl.: B28B 19/00, C04B 28/32, C04B 9/02, B32B 13/14

(54) **Sheet of magnesia cement, panels comprising it, and method and plant for the manufacture thereof**

(30) Priority: 31.12.2002 IT MI20022789
(71) Applicant: Vaghini, Alberto, 29100 Piacenza PC (IT)
(72) Inventor: Vaghini, Alberto, 29100 Piacenza PC (IT)
(74) Representative: Marchi, Massimo

(57) **Abstract**

A plant (20) comprising at least one mixing machine (23), a rolling surface (21), a conveying surface (22), at least one first pair of rolling rollers (24A), in which the rollers are rotatably arranged parallel to each other at a pre-selected distance and at least one of them is motorized, and means (25) for conveying a paste formed in said mixing machine (23) into the vicinity of said first pair of rolling rollers (24A).

## Description

The present invention relates to a sheet of magnesia cement, to the panels comprising it and to a method and a plant for the manufacture thereof.

The panels according to the present invention are particularly useful for forming walls, ceilings, floors and the like, for example in ships.

As is known, the first magnesia cement was described by Sorel in 1867 who obtained it by combining magnesium oxide with an aqueous solution of magnesium chloride. One of its main components is magnesium oxychloride. This cement is therefore also known as magnesium oxychloride cement. Other magnesia cements are (a) magnesium oxysulphate (MOS) cement, which is similar to magnesium oxychloride cement and is obtained by combining magnesium oxide with an aqueous solution of magnesium sulphate, and (b) magnesium phosphate (MAP) cement obtained by reacting magnesium oxide with a soluble phosphate such as, for example, monobasic ammonium phosphate (NH₄H₂PO₄).

These magnesia cements may also contain inorganic and/or organic inert fillers.

EP-A-0,001,992 and DE-A-28 10 180 describe a low-density magnesium oxychloride cement obtained by reacting magnesium oxide with an aqueous solution of magnesium chloride in the presence of hydrogen peroxide and, when required, a suitable catalyst, together with other ingredients such as, for example, derivatives of cellulose, water-soluble albumins, etc.

WO 02/02477 describes in turn a panel of magnesium oxychloride cement. This panel, which is rigid and light, is particularly suitable for the construction of internal walls, ceilings and floors in ships, aircraft, civil and/or industrial structures, sanitary environments, laboratories and the like. Moreover, this panel has the advantage that it is not combustible and does not release toxic gases when in contact with flames and is heat-insulating and sound-proof.

Generally articles made of magnesia cement are manufactured by means of die-forming. However, this manufacture technique is fairly costly owing to the processing time and the labour required. This has prevented significantly the diffusion thereof.

A method has now been found that makes it is possible to manufacture sheets of magnesia cement in a rapid and low-cost manner.

It is therefore a first object of the present invention to provide a method for manufacturing a sheet of magnesia cement, which comprises the following steps:
a) mixing magnesium oxide with a solution of magnesium chloride and, optionally, other ingredients;
b) transferring the mixture thus obtained onto a flat rigid support while laying out at least a first fabric under or on said mixture;
c) conveying said flat rigid support, said at least one first fabric and said mixture between at least one pair of rollers which are arranged parallel to each other and at a pre-selected distance from each other, so as to form on said flat rigid support a sheet of paste-like magnesia cement which has a pre-selected and uniform thickness and which is coupled with at least one first fabric pressed against one side thereof;
d) leaving said sheet of magnesia cement to cure.

In a preferred embodiment, after the curing step d), said magnesia cement has a density which ranges from 850 to 1,350 kg/m³. Preferably, said density ranges from 1,000 to 1,250 kg/m³ and, even more preferably, from 1,150 to 1,250 kg/m³.

From now on, said magnesia cement having a density which ranges from 850 to 1,350 kg/m³ will be referred to, for the sake of brevity, as high-density magnesia cement.

In another embodiment, after the curing step d), said magnesia cement has a density which ranges from 150-600 kg/m³. Even more preferably said density ranges from 200 to 400 kg/m³.

From now on, the magnesia cement having a density which ranges from 150-600 kg/m³ will be referred to, for the sake of brevity, as low-density magnesia cement.

The composition of the mixture which is mixed in step a) depends on the desired density of the sheet and other factors of a cost-related and/or aesthetic nature as well as on the mechanical properties which are to be imparted to the sheet.

Typically, when it is required to obtain a sheet having a density of between 850 and 1300 kg/m³ 100 parts by weight of magnesium oxide powder are mixed with 90-130 parts by weight of an aqueous solution containing from 40 to 65%, preferably from 45 to 63% by weight of magnesium chloride.

Advantageously, other ingredients are also added, such as phosphoric acid, magnesium trisilicate, naphthalene sulphonate, styrene acrylic resins in an emulsion, sawdust, mineral powders and expanded perlite.

The preferred features of said expanded perlite are: average grain size≤1 mm; density = 70-120 kg/m³.

When they are present, the quantities by weight of said further ingredients are, relative to 100 parts by weight of magnesium oxide: 0.4-0.5 phosphoric acid; 4-6 magnesium trisilicate; 0.05-0.2 naphthalene sulphonate; 50-100, preferably 60-80, emulsion with 10% by weight of styrene acrylic resin; 10-30, preferably, 15-25, sawdust; 1-10 expanded perlite.

When it is required to obtain a sheet having a density of between 150 and 600 kg/m³, 5-25 parts, preferably 15-20 parts by weight of hydrogen peroxide at 130 volumes is added to the abovementioned composition.

Step a) is preferably carried out at room temperature in a conventional cement mixing machine.

Step b) is preferably carried out by metering the paste-like magnesia cement by means of gravity through a hopper.

Typically, said flat rigid support is about 1.3 m wide, about 2.5 m long and about 0.3 m thick. It may be made of metal, wood, a polymer material such as polyethylene, polypropylene, polycarbonate or any other material which is inert with respect to the paste-like magnesia cement.

Advantageously, step c) is carried out by laying out a web of said at least one first fabric between said flat rigid support and said mixture before they pass through said two rollers. Alternatively, said web is laid out on said mixture.

In a preferred embodiment, a web of said at least one first fabric is laid out on and another web of said at least one first fabric is laid out under said mixture.

In a further preferred embodiment a web of second fabric is also laid out on said mixture and another web of said second fabric is laid out under said mixture.

The fabrics according to the present invention may be both woven fabrics and non-woven fabrics and may be formed by organic or inorganic fibres or mixtures thereof.

Typically, a fabric according to the present invention is a glass fibre meshwork. Preferably the meshes of said meshwork have dimensions of about 3 x 3 mm. Advantageously, the weight of said meshwork is 30-100 g/m³. Preferably, the weight of said meshwork is 40-70 g/m³ and, even more preferably, 45-55 g/m².

Another fabric according to the present invention typically is a polyester non-woven fabric. Preferably, it has a weight of 10-100 g/m³, more preferably, 10-50 g/m², and even more preferably, 10-25 g/m².

Advantageously, the glass fibre meshwork is placed in direct contact with the magnesia cement and the polyester non-woven fabric is placed on the fabric in the form of glass fibre meshwork.

In some particularly preferred embodiments, the structure of the sheet according to the present invention is characterized by the following combinations:
- glass fibre meshwork / polyester non-woven fabric / high or low-density magnesia cement / polyester non-woven fabric / glass fibre meshwork;
- glass fibre meshwork / high or low-density magnesia cement / glass fibre meshwork;
- high or low-density magnesia cement / polyester non-woven fabric / glass fibre meshwork;
- high or low-density magnesia cement / glass fibre meshwork;
- polyester non-woven fabric / high or low-density magnesia cement / polyester non-woven fabric;
- polyester non-woven fabric / high or low-density magnesia cement.

Depending on the various types of application, other types of combination may also be preferred.

In step c) of the method of the present invention, it is preferred to use several pairs of rollers which gradually reduce (by means of rolling) the thickness of the paste-like sheet until the desired thickness, for example 2-10, preferably 3-6 mm, is reached.

The abovementioned thicknesses are only given by way of example. The person skilled in the art will readily realize that the thickness of the sheets of the present invention may also vary within wider ranges depending on the intended use of the sheet.

At the end of rolling, the sheet is cut at the start and the at the end of each flat rigid support on which it was rolled. For example, if the flat rigid supports used are 2.5 m long, the sheet will be cut every 2.5 m. Sheets having substantially the same length as the respective flat rigid support are thus formed.

Finally, the flat rigid supports, each supporting a respective sheet, may be stacked at a certain distance heightwise from each other, for example 1-5 cm, in suitable racks where the hardening step d) (curing) starts.

When it is required to manufacture a shaped, for example corrugated, sheet, at the end of the step c) and before the step d), the paste-like sheet must be removed from the respective flat rigid support and placed on a shaped support which will provide it with the desired shape and on which step d) will be performed.

For this purpose, during step a), a layer, for example of polyethylene, is laid out on the flat rigid support and, if required, said first and second fabrics and, finally, said mixture may be laid out thereon. Steps b) and c) are carried out as described further above. At the end of step c), operators will remove the polyethylene layer supporting the paste-like sheet from the flat rigid support and will place it on the abovementioned shaped support.

Step d) may be carried out at room temperature and room humidity level, that is under conditions which are variable during the course of the day and from one day to the next. In this case the curing period is about 20-30 days, but after about 3-5 days, the sheets are already self-supporting. After this time period it is therefore advantageous to remove the rigid supports in order to use them for the manufacture of other sheets.

However, the curing period may advantageously be reduced by carrying out step d) in a special chamber where the temperature is adjusted to about 25-50°C, preferably about 30-40°C, in an atmosphere which is controlled with particular regard to the humidity and carbon dioxide levels.

In a second aspect, the present invention relates to a plant comprising:
- at least one mixing machine,
- a rolling surface
- a conveying surface
- at least one first pair of rolling rollers, where the rollers are rotatably arranged parallel to each other at a pre-selected distance and at least one of them is motorized, and
- means for conveying a paste formed in said mixing machine into the vicinity of said first pair of rolling rollers.

Advantageously, the distance between the rolling rollers of said at least one pair is adjustable.

Preferably, said plant is also provided with at least one idle rotating roller for feeding a web.

Advantageously, said conveying surface comprises idle rotating conveyor rollers.

In a preferred embodiment said means for transferring a paste from said mixing machine into the vicinity of said first pair of rolling rollers consist of a hopper formed so as to allow falling, by means of gravity, of a predetermined quantity of mixture per unit of time depending on the speed of rotation of said at least one first pair of rolling rollers.

In a further preferred embodiment, the plant according to the present invention is also provided with other pairs of rolling rollers for reducing gradually the thickness of the paste-like sheet to the desired value.

The maximum number of feeding rollers depends on the maximum number of layers used for the manufacture of a sheet according to the present invention.

Typically said rollers are 5 in number. One for feeding the abovementioned layer of polyethylene, two for feeding two fabrics to be coupled with the bottom side of the paste-like sheet of magnesia cement and two for feeding two fabrics to be coupled with the top side of said paste-like sheet.

During use, the mixing machine is charged with magnesium oxide and an aqueous solution of magnesium chloride and with any further possible ingredients. Once the desired mixture has been obtained, the latter is discharged into a hopper from where it falls by means of gravity into the vicinity of said at least one first pair of rolling rollers,

Beforehand, a flat rigid support was placed on the loading section and under the hopper, and the web or webs required by the particular type of sheet to be manufactured were placed thereon. In particular, the front end of said web(s) is passed through the slit present between the rolling rollers of the said first pair.

Rotation of the first pair of rolling rollers drives the web or webs together with the paste-like mass which has fallen from the hopper. When several pairs of rolling rollers are envisaged, the flat rigid support carrying the web(s) and the paste-like mass which has undergone initial rolling passes to the other pairs of rolling rollers where its thickness is gradually reduced to a predetermined thickness.

The sheet is then cut and curing thereof is performed as described further above.

During rolling of the magnesia cement sheets according to the present invention and curing thereof, the abovementioned fabrics become impregnated by said cement and are not easily identifiable, in particular to the naked eye, within the hardened (cured) cement sheet.

According to a third aspect, the present invention relates to a magnesia cement sheet coupled with at least one fabric.

As regards the structure of said sheet and the method for manufacturing it, reference should be made to that already described above.

Surprisingly it has been found that, when it is coupled with at least one of the fabrics having the features indicated further above, the rolled paste-like mass of magnesia cement gains, during curing, mechanical properties which are superior to those obtained by curing, under the same conditions, the rolled paste-like mass without fabrics.

The reason for this advantageous effect is not yet known, but it is supposed that said at least one fabric governs the interchange of gases and vapours between the paste-like mass being cured and the surrounding environment so as to favour the acquisition of improved mechanical properties.

Moreover, the sheet according to the present invention is light, non-combustible, heat-insulating and sound-proof and does not manufacture toxic gases when in contact with flames.

In a fourth aspect, the present invention relates to a panel comprising two flat sheets which are parallel to each other and a spacing element which is arranged between said sheets, characterized in that at least one of said sheets or at least said spacing element is made of magnesia cement and has at least one fabric applied to one side thereof.

Advantageously, both said sheets are made of magnesia cement. Even more advantageously, both said sheets have at least one fabric applied to their top side and at least one fabric applied to their bottom side.

Preferably, said magnesia cement from which said sheets are made is a high-density cement.

Preferably, said spacing element is also made of magnesia cement. Typically, it is made of of rolled magnesia cement. In one embodiment, said magnesia cement spacing element is rolled in the form of a sheet. Preferably, said magnesia cement spacing element rolled in the form of a sheet also has at least one fabric applied onto its top side as well as a fabric applied onto its bottom side.

In a preferred embodiment, said spacing element in the form of a sheet is shaped. Preferably, said shaping is such as to impart to the sheet a shaped profile with a periodic progression. Typically, the spacing element in the form of a sheet has a sinusoidal form or has a triangular or square wave form.

Said shaping has the advantage of forming linear recesses inside which it is possible to arrange pipes and/or cables such as, for example, water ducts or telephone cables or electric power supply cables.

Advantageously, said shaped sheet is also made of a high-density magnesia cement.

In another embodiment, said spacing element is in the form of a flat sheet and is made of a low-density magnesia cement.

Advantageously, when said spacing element is in the form of a shaped sheet, at least some of the recesses present between said shaped sheet and said two flat sheets are filled with a low-density magnesia cement in order to improve the mechanical properties thereof.

Preferably, said spacing element is in the form of a sheet and is particularly useful for forming, using known methods, a panel for internal walls, ceilings and floors in ships, aircraft, civil and/or industrial structures, sanitary environments, laboratories and the like.

Characteristic features and advantages of the present invention will become even more clear in view of the following exemplary and nonlimiting description with reference to the accompanying schematic drawings in which:
- Figure 1 is a partial cross-section through an embodiment of a panel according to the present invention;
- Figure 2 is a enlarged partial cross-section through a sheet according to the present invention used for construction of the panel in Figure 1;
- Figure 3 is a perspective view of the panel according to Figure 1;
- Figure 4 is an exploded perspective view of a flat sheet (10, 11) according to Figure 1;
- Figure 5 is an exploded perspective view of a corrugated sheet (17) according to Figure 1;
- Figure 6 is a partial perspective view of the plant according to the present invention; and
- Figure 7 is partial side elevation view of the plant according to the present invention.

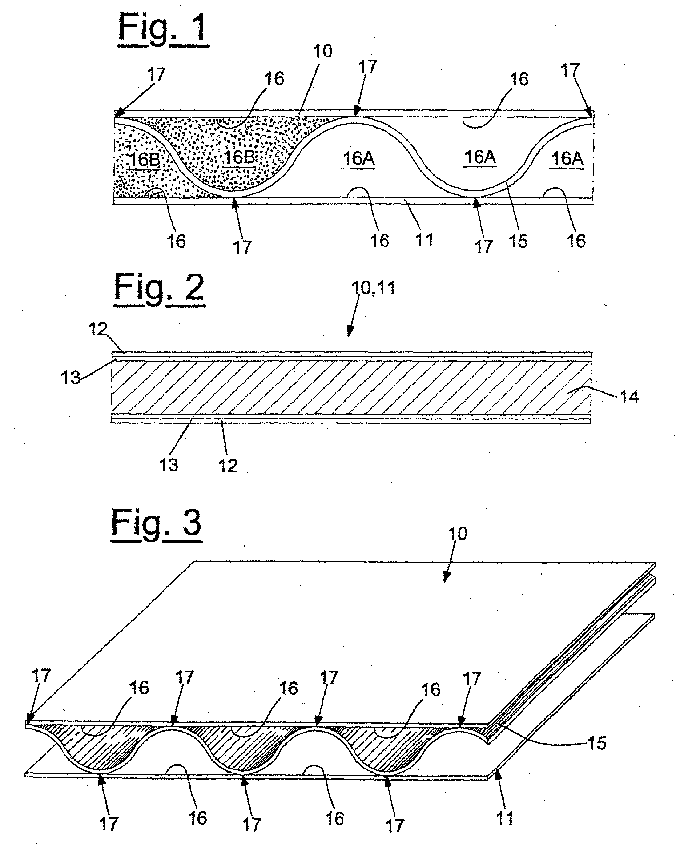

With reference to Figures 1-5, 10 and 11 denote two flat sheets of high-density magnesia cement according to the present invention, arranged parallel to each other.

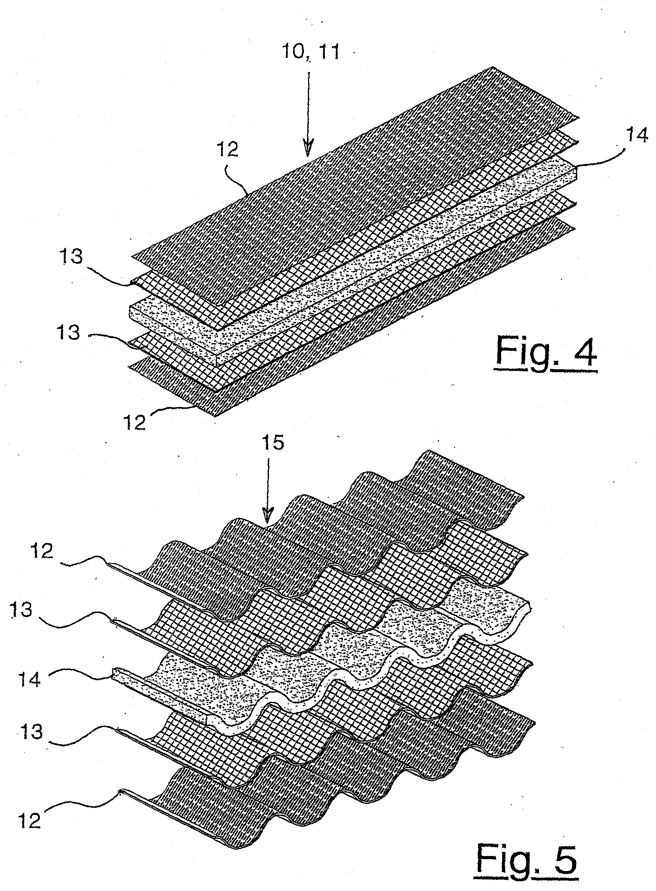

In the embodiment shown, each sheet 10 and 11 comprises an internal central layer 14 obtained by means of rolling of a paste-like magnesia cement, external layers 12 of a first fabric and intermediate layers 13 of a second fabric (Figures 2 and 4).

In the panel according to Figures 1 and 3, the spacing element is a corrugated sheet 15. Said corrugated sheet 15 also comprises an internal central layer 14 obtained by means of rolling of a paste-like magnesia cement, external layers 12 of a first fabric and intermediate layers 13 of a second fabric (Figures 2 and 5).

After rolling, said sheet 15 is suitably shaped (corrugated), while it is still pliable, being to left to cure on a corrugated support.

Both in the flat sheets 10 and 11 and in the corrugated sheet 15, said first external layer 12 is preferably formed by a polyester non-woven fabric, while said intermediate layer 13 is preferably formed by a glass fibre meshwork.

As illustrated in Figures 1 to 3, the shaping of the sheet 15 allows spaces or recesses 16 to be obtained between the sheets 10, 15 and 11.

The corrugated sheet 15 is fixed to the flat sheets 10 and 11 by means of suitable known organic or inorganic adhesive compounds applied in the contact zones 17.

The recesses 16 may be left empty (as in the case of the recesses indicated by 16A in Figure 1) in order to house electric lines, water pipes or similar pipes or supply ducts for the various service facilities within the cabin, or may be filled, at least partially, with a low-density magnesia cement (as in the case of the recesses indicated by 16B in Figure 1) in order to obtain panels which are rigid and strong as well as being very light.

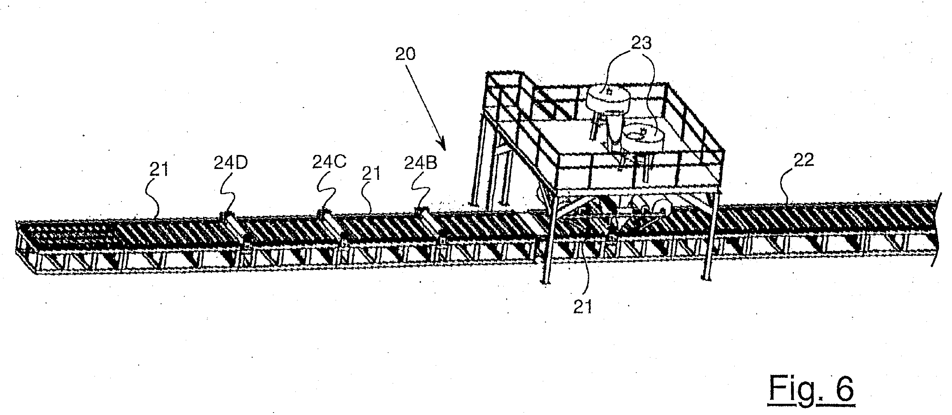

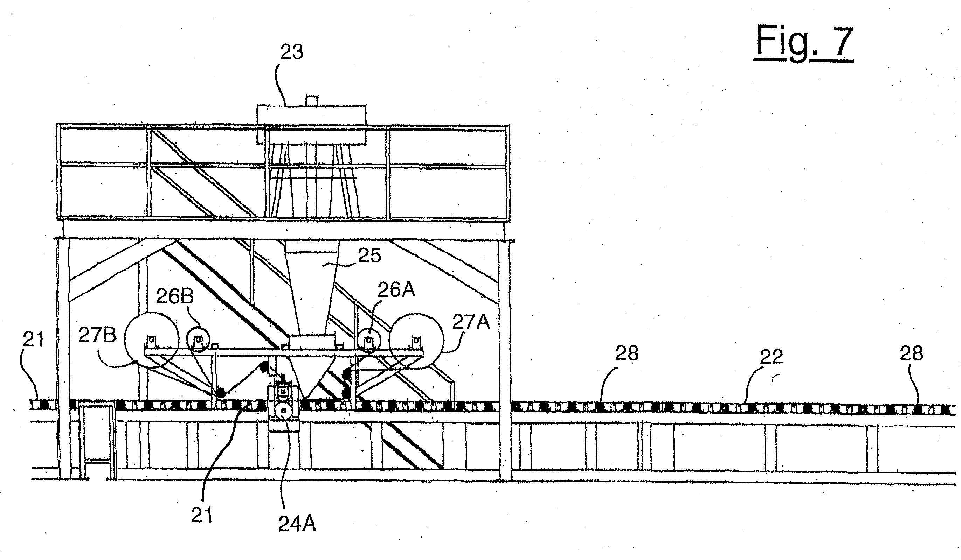

With reference to Figures 6 and 7, a plant 20 according to the present invention comprises two cement mixing machines 23 of the conventional type, a rolling surface 21 and a conveying surface 22.

The plant also comprises a first pair of rolling rollers 24A and another three pairs of rolling rollers 24B, 24C and 24D, at least one roller of each pair being motorized.

Moreover, the plant comprises a hopper 25 for transferring the paste formed inside said mixing machines 23 into the vicinity of said first pair of rolling rollers 24A.

Finally, the plant comprises four idle rotating rollers (26A, 26B, 27A, 27B) each for feeding a web or layer.

In the embodiment shown in Figures 6 and 7 the rollers 26A and 26B feed the fabric 13, while the rollers 27A and 27B feed the non-woven fabric 12.

In turn, the conveying surface 22 comprises idle rotating conveyor rollers 28.

The four pairs of feed rollers 24A, 24B, 24C and 24D gradually reduce the thickness of the paste-like sheet to the desired value.

In order to manufacture a sheet of magnesia cement which is 3 mm thick and with a density of 1,250 kg/m³, the mixing machines 23 were charged with: 137.65 kg of magnesium oxide; 140.40 kg of an aqueous solution with 50% magnesium chloride; 700 kg of phosphoric acid in a concentration of 85%; 5.50 kg of magnesium trisilicate; 90.85 kg of an emulsion containing 10% styrene acrylic resin; 20.65 kg of sawdust; 140 kg of naphthalene sulphonate; 4.13 kg of expanded perlite.

The mixture was mixed at room temperature until completely uniform and then discharged into the hopper 25.

Beforehand, a flat rigid support (not shown), 1.3 m wide, 2.5 m long and 3 mm thick was placed under the hopper, and a web of fabric 12 and a web of fabric 13 unwound from the feed cylinders 26A and 27A were laid out over the said support, the front ends of said fabrics 12 and 13 being passed between the rolling rollers of the first pair 24A. The motorized roller of the first pair 24A was then activated and the support lined with the webs of fabrics 12 and 13 and with a predetermined quantity of mixture was driven between the rolling rollers of said first pair 24A, while another two webs of fabrics 12 and 13 were unwound from the respective cylinders 26B and 27B and arranged on the mixture. After travelling past the first pair 24A of rolling rollers, the flat rigid support carrying the sheet of magnesia cement according to the invention being formed was passed between the second pair 24B and then between the third and fourth pair 24C and 24D, respectively, where the thickness of the sheet being formed was gradually reduced to 3mm. Upon leaving the fourth pair 24D, the paste-like sheet of magnesia cement placed on the flat rigid support was cut at the front and rear end of the said flat rigid support. The method proceeded continuously with the feeding, by the conveying surface 22, of a flat rigid support in direct contact with the previous support under the hopper 25. The rolling speed was 2 m/min.

The paste-like sheets of magnesia cement according to the present invention thus obtained and resting on the respective flat rigid supports were arranged on a suitable rack and left to cure.

At the end of the curing process, the sheets of magnesia cement thus obtained have a density of 1,250 kg/m³ and possess several advantageous properties. For example, they do not have a reduced weight and their mechanical properties remain unchanged even after 60 days immersed in water.

## Claims

1. A method for manufacturing a sheet of magnesia cement (10, 11, 15), **characterized in that** it comprises the following steps:
a) mixing magnesium oxide with a solution of magnesium chloride and any other possible ingredients;
b) transferring the mixture thus obtained onto a flat rigid support, while laying out at least one first fabric (12, 13) under or on said mixture;
c) conveying said flat rigid support, said at least one first fabric (12, 13) and said mixture between at least one pair of rollers (24A) which are arranged parallel to each other and at a pre-selected distance from each other, so as to form on said flat rigid support a sheet of paste-like magnesia cement (10, 11, 15) which has a pre-selected and uniform thickness and which is coupled with said at least one first fabric (12, 13) pressed against one side thereof;
d) leaving said sheet of magnesia cement to cure.

2. Method according to Claim 1, **characterized in that**, in step a), 100 parts by weight of magnesium oxide powder are mixed with 90-130 parts by weight of an aqueous solution containing from 40 to 65% by weight of magnesium chloride.

3. A method according to Claim 2, **characterized in that** said aqueous solution contains from 45 to 63% by weight of magnesium chloride.

4. A method according to any one of the preceding claims, **characterized in that** at least one other ingredient chosen from the group comprising phosphoric acid, magnesium trisilicate, naphthalene sulphonate, styrene acrylic resins in an emulsion, sawdust, mineral powders and expanded perlite is also present.

5. A method according to any one of the preceding Claims 2 to 4, **characterized in that** hydrogen peroxide is also added to said ingredients

6. A method according to any one of the preceding claims, **characterized in that** said step a) is carried out at room temperature.

7. A method according to any one of the preceding claims, **characterized in that** said step b) is carried out by metering the paste-like magnesium cement by means of gravity through a hopper (25).

8. A method according to any one of the preceding Claims 1 to 7, **characterized in that** step c) is carried out by laying out a web of said at least one first fabric (12, 13) between said flat rigid support and said mixture before they pass through said two rollers (24A).

9. A method according to any one of preceding Claims 1 to 7, **characterized in that** step c) is carried out by laying out a web of said at least one first fabric (12, 13) on said mixture before they pass through said two rollers (24A).

10. A method according to any one of the preceding Claims 1 to 7, **characterized in that** step c) is carried out by laying out a web of said at least one first fabric (12, 13) on and another web of said at least one first fabric (12, 13) under said mixture before they pass through said two rollers (24A).

11. A method according to any one of the preceding Claims 1 to 7, **characterized in that** step c) is carried out by laying out two webs of fabric (12, 13) on and another two webs of fabric (12, 13) under said mixture before they pass through said two rollers (24A).

12. A method according to any one of the preceding claims, **characterized in that** several pairs of rollers which gradually reduce the thickness of the paste-like sheet are used.

13. A method according to any one of the preceding claims, **characterized in that** step d) is carried out at room temperature and at room humidity degree.

14. A method according to any one of the preceding Claims 1 to 12, **characterized in that** step d) is carried out in a chamber, the temperature of which is adjusted to about 25-50°C.

15. A method according to Claim 14, **characterized in that** the temperature is about 30-40°C.

16. A plant (20), **characterized in that** it comprises:
- at least one mixing machine (23),
- a rolling surface (21),
- a conveying surface (22),
- at least one first pair of rolling rollers (24A), where the rollers are rotatably arranged parallel to each other at a pre-selected distance, and at least one of them is motorized, and
- means (25) for conveying a paste formed in said mixing machine (23) into the vicinity of said first pair of rolling rollers (24A).

17. A plant (20) according to Claim 16, **characterized in that** the distance between said rolling rollers (24A) is adjustable.

18. A plant (20) according to Claim 16 or 17, **characterized in that** it is also provided with at least one idle rotating roller (26A, 26B, 27A, 27B) for feeding a web or layer.

19. A plant (20) according to any one of Claims 16 to 18, **characterized in that** said conveying surface (22) comprises idle rotating conveyor rollers (28).

20. A plant (20) according to any one of Claims 16 to 19, **characterized in that** said means for transferring a paste from said mixing machine (23) into the vicinity of said first pair of rolling rollers (24A) consist of a hopper (25) formed so as to allow falling, by means of gravity, of a predetermined quantity of mixture per unit of time depending on the speed of rotation of said at least one first pair of rolling rollers (24A).

21. A plant (20) according to any one of Claims 16 to 20, **characterized in that** it also comprises other pairs of rolling rollers (24B, 24C, 24D) for reducing gradually the thickness of the paste-like sheet to the desired value.

22. A plant (20) according to any one of Claims 16 to 21, **characterized in that**, in each of said other pairs of rolling rollers (24B, 24C, 24D), the distance between the respective rollers is adjustable.

23. A plant (20) according to any one of Claims 16 to 22, **characterized in that** at least one roller of each of said other pairs of rolling rollers (24B, 24C, 24D) is motorized.

24. A sheet (10, 11, 15), **characterized in that** it is an internal layer (14) of magnesia cement coupled with at least one fabric (12, 13).

25. A sheet (10, 11, 15) according to Claim 24, **characterized in that** said magnesia cement has a density which ranges from 850 to 1,350 kg/m³.

26. A sheet (10, 11, 15) according to Claim 25, **characterized in that** said magnesia cement has a density which ranges from 1,000 to 1,250 kg/m³.

27. A sheet (10, 11, 15) according to Claim 26, **characterized in that** said magnesia cement has a density which ranges from 1,150 to 1,250 kg/m³.

28. A sheet (10, 11, 15) according to Claim 24, **characterized in that** said magnesia cement has a density which ranges from 150 to 600 kg/m³.

29. A sheet (10, 11, 15) according to Claim 28, **characterized in that** said magnesia cement has a density which ranges from 200 to 400 kg/m³.

30. A sheet (10, 11, 15) according to any one of Claims 24 to 29, **characterized in that** said internal layer (14) of magnesia cement is coupled with a fabric (13) consisting of a glass fibre meshwork.

31. A sheet (10, 11, 15) according to Claim 30, **characterized in that** the meshes of said meshwork have dimensions of about 3 x 3 mm.

32. A sheet (10, 11, 15) according to Claim 30 or 31, **characterized in that** said meshwork has a weight of 30-100 g/m².

33. A sheet (10, 11, 15) according to Claim 32, **characterized in that** said meshwork has a weight of 40-70 g/m².

34. A sheet (10, 11, 15) according to Claim 33, **characterized in that** said meshwork has a weight of 45-55 g/m².

35. A sheet (10, 11, 15) according to any one of Claims 24 to 34, **characterized in that** said internal layer (14) of magnesia cement is coupled with a fabric (12) consisting of a polyester non-woven fabric.

36. A sheet (10, 11, 15) according to Claim 35, **characterized in that** said non-woven fabric has a weight of 10-100 g/m².

37. A sheet (10, 11, 15) according to Claim 36, **characterized in that** said non-woven fabric has a weight of 10-50 g/m².

38. A sheet (10, 11, 15) according to Claim 37, **characterized in that** said non-woven fabric has a weight of 10-25 g/m².

39. A sheet (10, 11, 15) according to any one of Claims 24 to 38, **characterized in that** said fabric (13) consisting of a glass fibre meshwork is placed in direct contact with said internal layer (14) of magnesia cement.

40. A sheet (10, 11, 15) according to any one of Claims 24 to 39, **characterized in that** said non-woven fabric (12) is placed on the fabric (13) consisting of a glass fibre meshwork.

41. A panel comprising two flat sheets (10, 11) parallel to each other and a spacing element (15) arranged between said sheets (10, 11), **characterized in that** at least one of said sheets (10, 11) or at least said spacing element (15) was manufactured using the method according to any one of the preceding Claims 1 to 15.

42. A panel comprising two flat sheets (10,11) parallel to each other and a spacing element (15) arranged between said sheets (10, 11), **characterized in that** at least one of said sheets (10, 11) or at least said spacing element (15) was manufactured using the plant according to any one of the preceding claims 16 to 23.

43. A panel comprising two flat sheets (10, 11) parallel to each other and a spacing element (15) arranged between said sheets (10, 11), **characterized in that** at least one of said sheets (10, 11) or at least said spacing element (15) is a sheet according to any one of the preceding Claims 24 to 40.
